# EUROPÄISCHE PATENTSCHRIFT

(11) **EP 1 005 475 B1**
(45) Veröffentlichungstag und Bekanntmachung des Hinweises auf die Patenterteilung: **21.01.2004**
(21) Anmeldenummer: 98945195.0
(22) Anmeldetag: 08.08.1998
(51) Int. Cl.: C07F 9/30, C07F 9/6571, C07F 9/32

(54) **VERFAHREN ZUR HERSTELLUNG VON GLUFOSINATE UND ZWISCHENPRODUKTE DAFÜR**
METHOD FOR PRODUCING GLUFOSINATES AND INTERMEDIATE PRODUCTS FOR THE SAME
PROCEDE DE FABRICATION DE GLUFOSINATES ET PRODUITS INTERMEDIAIRESY RELATIFS

(30) Priorität: 20.08.1997 DE 19736125
(43) Veröffentlichungstag der Anmeldung: 07.06.2000
(73) Patentinhaber: Bayer CropScience GmbH, 65929 Frankfurt/Main (DE)
(72) Erfinder: WILLMS, Lothar, D-65719 Hofheim (DE)
(86) Internationale Anmeldenummer: PCT/EP1998/005053
(87) Internationale Veröffentlichungsnummer: WO 1999/009039

(56) Entgegenhaltungen:
- EP-A- 0 009 022
- EP-A- 0 011 245
- EP-A- 0 292 918
- DE-A- 3 508 573
- NACHEV I: "Total synthesis and enzyme-substrate interaction of D-, DL-, and L-phosphinotricine, 'bialaphos' (SF-1293) and its cyclic analogs" J. CHEM. SOC., PERKIN TRANS. 1 (JCPRB4,0300922X);89; (1); PP.125-31, XP002087193 Res. Cent. 'Konstrukcionni Polymeri';Sofia; 1528; Bulg. (BG)

## Beschreibung

Die Erfindung betrifft das technische Gebiet der Verfahren zur Herstellung von biologisch aktiven Verbindungen und deren Vorprodukte, vorzugsweise von Pflanzenschutzmitteln, insbesondere dem Herbizid Glufosinate, auch als Phosphinothricin bezeichnet.

Glufosinate (siehe Formel (Ia) ist der Kurzname oder "common name" für den Wirkstoff (D,L)-2-Amino-4-[Hydroxy-(methyl)phosphinyl]-butansäure, der als Monoammoniumsalz kommerziell erhältlich ist und als Blattherbizid eingesetzt wird (siehe DE-A-2717440, US-A-4168963).

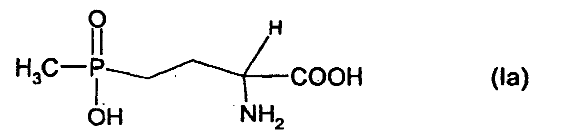

Das Herbizid kann zur nicht-selektiven Bekämpfung von Unkräutern im Obst- und Weinbau, in Plantagekulturen, im Gemüsebau vor der Aussaat oder dem Verpflanzen, vor der Direktsaat von Mais oder Sojabohne sowie auf Nichtkulturland wie Wegrändern, Industriegelände und Bahnanlagen eingesetzt werden (vgl. Z. PflKrankh.PflSchutz, Sonderheft IX, 431-440, 1981). Bekannt ist auch der selektive Einsatz zur Bekämpfung von Unkräutern in gentechnisch resistent gemachten Nutzpflanzenkulturen wie Mais und Raps u. a. (vgl. EP-A-0242246).

Eine Vielzahl von Verfahren zur Herstellung von Glufosinate sind bekannt. In EP-A-0009022 ist ein mehrstufiges Verfahren beschrieben, wobei zunächst ein Methylphosphonigsäurediester mit Acrolein in einem Alkohol zu einem Acetal von 3-Oxopropyl(methyl)phosphinsäureester reagiert, das Acetal anschließend mit Säure zum Aldehyd hydrolysiert wird und der Aldehyd dann mit einem Strecker-Verfahren und Hydrolyse zu Glufosinate umgesetzt wird. Die Ausbeute an Glufosinate ist bei diesem Verfahren noch nicht optimal.
Nach der in EP-A-0011245 (US-A-4521348) beschriebenen Variante lassen sich phosphorhaltige Cyanhydrinderivate der Formel 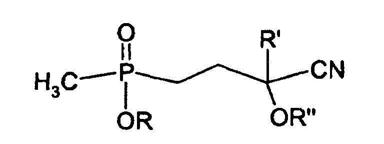 worin R ein gegebenenfalls substituierter Kohlenwasserstoffrest wie Alkyl, Haloalkyl, Cycloalkyl, Phenyl oder Benzyl ist, R' Wasserstoff, Alkyl, Phenyl oder Benzyl und R" Wasserstoff, Acyl, Trialkylsilyl oder Alkylsulfonylalkyl bedeuten,
in Aminonitrile überführen, die ihrerseits zu Glufosinate hydrolysiert werden können. Die Herstellung der Cyanhydrinderivate erfolgt nach EP-A-0011245 durch Reaktion eines Methanphosphonigsäuremonoalkylesters und eines Acroleincyanhydrinderivats der Formel 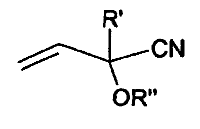 worin R' und R" die obengenannte Bedeutung haben. Das beschriebene Verfahren hat den Nachteil, daß das phosphorhaltige Derivat und dessen Vorstufen in Form von Estern bereitgestellt werden müssen, obwohl im gewünschten Produkt Glufosinate (Ia) der (Hydroxy)(methyl)phosphinylrest in hydrolysierter Form vorliegt.

Aufgabe der vorliegenden Erfindung ist ein zum vorstehend beschriebenen Verfahren alternatives Verfahren, das die Zahl der Estervorstufen verringern läßt und zur Herstellung von Glufosinate und verwandter Verbindungen geeignet ist.

Gegenstand der Erfindung ist ein Verfahren zur Herstellung von Verbindungen der Formel (I), 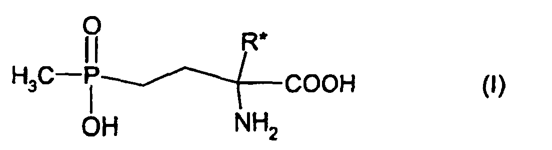 worin R* Wasserstoff oder (C₁-C₄)-Alkyl bedeutet, vorzugsweise H oder Methyl bedeutet, oder deren Salze mit Säuren oder Basen, dadurch gekennzeichnet, daß man

### a) (Stufe 1)

eine trivalente Methylphosphorverbindung der Formel (II) mit einem ungesättigten Derivat der Formel (III) in Gegenwart eines Kondensationsmittels oder Aktivators aus der Gruppe der Carbonsäureanhydride und gegebenfalls Alkoholen zu einem Addukt (IV) umsetzt,

### Stufe 1:

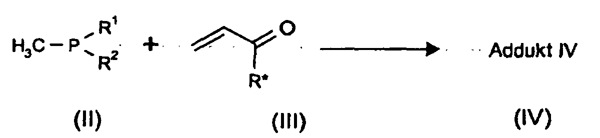

wobei in den Formeln
- R¹ und R²: unabhängig voneinander (C₁-C₁₈)Alkoxy, das gegebenenfalls substituiert sein kann, Benzyloxy oder Phenoxy, die ebenfalls substituiert sein können, bedeuten oder einer der Reste R¹ bzw. R² Hydroxy bedeutet,
und
- R*: wie in Formel (I) definiert ist,

### b) (Stufe 2)

das Addukt (IV), gegebenenfalls nach Hydrolyse zu Aldehyden (R* = H) bzw. Ketonen (R* = Alkyl) der Formel (IV') oder einem Salz davon, 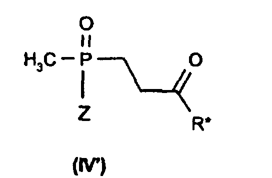 worin Z OH, R¹ oder R² bedeutet, unter den Bedingungen einer Streckersynthese mit Ammoniak/Ammoniumchlorid und Natriumcyanid oder alternativ mit Gemischen aus Ammoniak und Blausäure bzw. mit Ammoniak und einem Salz der Blausäure, wie z.B. Ammoniumcyanid oder Kaliumcyanid, gegebenenfalls in Gegenwart von Ammoniumchlorid, zu den α-Aminonitrilen der allgemeinen Formel (V) bzw. einem Salz davon umsetzt,

### Stufe 2:

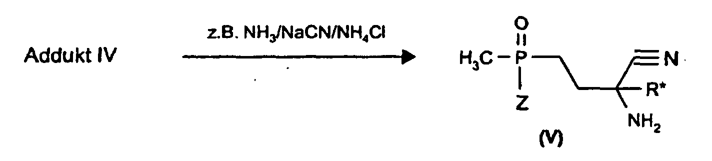

wobei in den Formeln (IV') und (V) der Rest R* wie in Formel (I) definiert ist und Z wie in Formel (IV') definiert ist oder OH bedeutet, und

### c) (Stufe 3)

die Verbindung der Formel (V) unter sauren oder basischen Bedingungen zur Verbindung der Formel (I) oder zu deren Salzen hydrolysiert.

In den genannten allgemeinen Formeln und den im folgenden verwendeten Formeln können die Reste Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 4 C-Atomen bzw. bei ungesättigten Gruppen mit 2 bis 4 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyle, 1-Methylhexyl und 1,4-Dimethylpentyl; Cycloalkyl bedeutet ein carbocyclisches gesättigtes Ringsystem, beispielsweise mit 3 bis 8 Ringatomen, z.B. Cyclopropyl, Cyclobutyl, Cyclopentyl, Cyclohexyl usw.; Alkenyl-, Alkinyl- und Cycloalkenylreste haben die Bedeutung der den Alkyl- bzw. Cycloalkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, Methyl-but-3-en-1-yl und 1-Methyl-but-2-en-1-yl; Cycloalkenyl ist beispielsweise Cyclopentenyl oder Cyclohexenyl; Alkinyl bedeutet z.B. Propargyl, But-2-in-1-yl, But-3-in-1-yl oder 1-Methyl-but-3-in-1-yl. Alkenyl in der Form "(C₃-C₄)-Alkenyl" oder "(C₃-C₆)-Alkenyl" bedeutet vorzugsweise einen Alkenylrest mit 3 bis 4 bzw. 3 bis 6 C-Atomen, bei dem die Doppelbindung nicht an dem C-Atom liegt, das mit dem Übrigen Molekülteil der Verbindung (I) verbunden ist ("yl"-Position). Entsprechendes gilt für (C₃-C₄)-Alkinyl usw.

Halogen bedeutet beispielsweise Fluor, Chlor, Brom oder lod. Haloalkyl, -alkenyl und-alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl₂, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Sind Substitutionen definiert durch "einen oder mehrere Reste aus einer Gruppe von Resten" beinhaltet dies sowohl die Substitution durch einen oder mehrere gleiche Reste als auch die einfache oder mehrfache Substitution durch unterschiedliche Reste.

Substituierte Reste, wie substituierte Kohlenwasserstoffreste, z.B. substitutiertes Alkyl, Alkenyl, Alkinyl, Aryl, Phenyl und Benzyl, oder substituiertes Heterocyclyl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Cyano, Azido, Alkoxycarbonyl, Alkylcarbonyl, Formyl, Carbamoyl, Mono- und Dialkylaminocarbonyl, substituiertes Amino wie Acylamino, Mono- oder Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)-Alkyl, vorzugsweise Methyl oder Ethyl, (C₁-C₄)-Haloalkyl, vorzugsweise Trifluormethyl, (C₁-C₄)-Alkoxy, vorzugsweise Methoxy oder Ethoxy, (C₁-C₄)-Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste aus der Gruppe Halogen, (C₁-C₄)-Alkyl, (C₁-C₄)-Alkoxy, (C₁-C₄)-Halogenalkyl, (C₁-C₄)-Halogenalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Ein Acylrest bedeutet den Rest einer organischen Säure, z.B. den Rest einer Carbonsäure und Reste davon abgeleiteter Säuren wie der Thiocarbonsäure, gegebenenfalls N-substituierten Iminocarbonsäuren, oder der Rest von Kohlensäuremonoestern, gegebenenfalls N-substituierten Carbaminsäuren, Sulfonsäuren, Sulfinsäuren, Phosphonsäuren, Phosphinsäuren. Acyl bedeutet beispielsweise Formyl, Alkylcarbonyl wie (C₁-C₄-Alkyl)-carbonyl, Phenylcarbonyl, wobei der Phenylring substituiert sein kann, z.B. wie oben für Phenyl gezeigt, oder Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren.

Verbindungen der allgemeinen Formel (II) sind bekannt bzw. lassen sich nach bekannten Verfahren herstellen, s. z.B. J.B. Miles et al. in Org. Prep. Proc. Int., 11 (1), 11 (1979); B.M.Gladshtein et al., Zh. Obshch. Khim. 39, 1951 (1969); DAS 1098940 (1959), Farbf. Bayer, Boetzel et al., J.Fluorine Chem. 68, 11 (1994); Hoffmann et al., JACS 80, 1150 (1958).

In den Verbindungen der Formel (II) sind R¹ und R² vorzugsweise unabhängig voneinander Halogen, wie z.B. Fluor, Chlor, Brom oder Jod, (C₁-C₆)Alkoxy, (C₁-C₆)Haloalkoxy, Benzyloxy oder Phenoxy, wobei jeder der letztgenannten beiden Reste unsubstituiert oder durch einen oder mehrere Reste aus der Gruppe Halogen, Alkyl, Haloalkyl, Alkylthio, Nitro, Cyano, Alkylsulfonyl und Haloalkylsulfonyl substituiert ist, vorzugsweise jeweils mit 1 bis 6 C-Atomen, insbesondere 1 bis 4 C-Atomen im Alkylteil, oder einer der Reste R¹ bzw. R² bedeutet vorzugsweise Hydroxy.

Besonders bevorzugt sind R¹ und R² jeweils (C₁-C₄)Alkoxy.

Die Verbindungen der allgemeinen Formel (III) sind Basischemikalien und deshalb ebenfalls bekannt.

Die Addukte (IV) können unterschiedlicher Struktur sein.

Bevorzugt werden in einer Ausführungsform Verbindungen der Formel (II-1) mit einer Verbindung der Formel (III) in Gegenwart von Carbonsäureanhydriden A₂O und Alkoholen ROH zu Addukten (IV-1) umgesetzt, wobei letztere Halbacetale darstellen 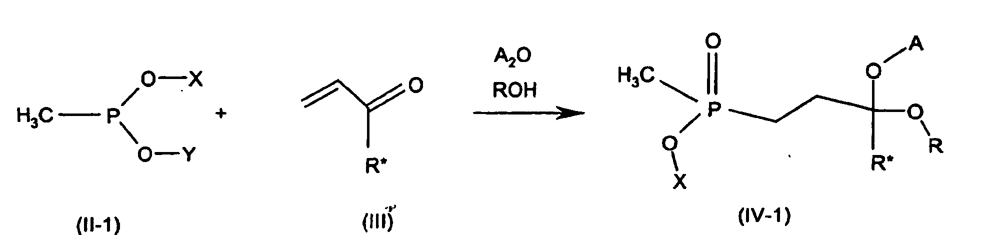 worin
-O-X bzw. -O-Y den Resten R¹ und R² entsprechen soweit dies Reste von Alkoholen sind, d.h.
jeder der Reste X und Y unabhängig voneinander H oder (C₁-C₁₈)-Alkyl, das unsubstituiert oder substituiert ist, Benzyl oder Phenyl, wobei jeder der beiden vorstehenden Reste unsubstituiert oder substituiert ist, vorzugsweise unsubstituiert oder durch einen oder oder mehrere Reste aus der Gruppe Halogen, Alkyl, Haloalkyl, Alkylthio, Nitro, Cyano, Alkylsulfonyl und Haloalkylsulfonyl substituiert ist, vorzugsweise jeweils mit 1 bis 6 C-Atomen, insbesondere-1 bis 4 C-Atomen im Alkylteil substituiert ist, und
vorzugsweise X und Y gleiche Reste bedeuten, insbesondere X, Y und R gleiche Reste bedeuten,
R* wie in Formel (I), vorzugsweise H,
A einen Acylrest einer Carbonsäure, vorzugsweise den Acylrest einer Carbonsäure mit 1 bis 6 C-Atomen, insbesondere 1 bis 4 C-Atomen,
R einen Rest aus der Gruppe der für X und Y definierten Reste, vorzugsweise der gleiche Rest wie X oder Y, bedeuten.

Besonders bevorzugt bedeuten
X, Y und R jeweils gleiche Reste aus der Gruppe (C₁-C₆)Alkyl, Phenyl oder Benzyl, inbesondere (C₁-C₄)Alkyl, beispielsweise Methyl, Ethyl, n-, i-Propyl, n-, i-, s- oder t-Butyl.

Entsprechend sind die Verbindungen (IV') und (V) in der bevorzugten Variante (ausgehend von Verbindungen (II-1)) Verbindungen der Formel (IV'-1) bzw. (V-1), 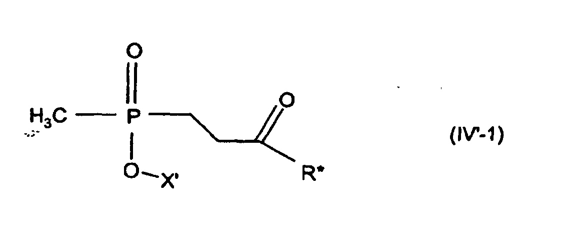 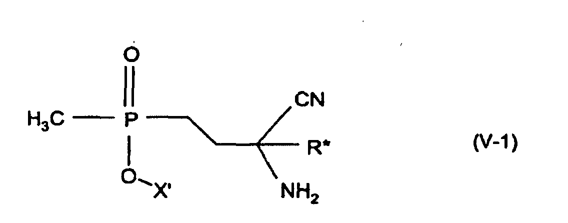 worin X' = H oder X bedeuten und R* und X wie oben definiert sind, oder Salze davon.

Bekannt sind Reaktionen von Phosphanen wie Phenyldichlorphosphan (IIa) mit α,β-ungesättigten Ketonen (VI) unter Zusatz von Acetanhydrid zu den 2-Phenyl-2-oxo-1,2-oxa-4-phospholenen (VII) (K.Bergesen, Acta Chem. Scand. 19, 1784 (1965)), 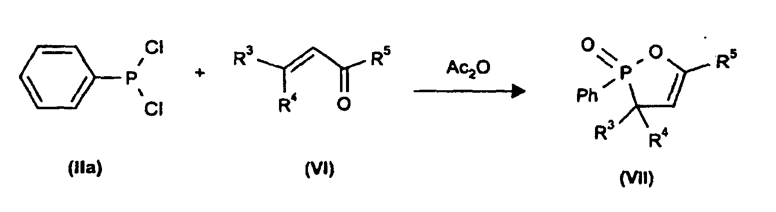 worin R³ und R⁴ Wasserstoff, Methyl oder Phenyl und R⁵ Methyl oder Phenyl bedeuten.

Weiterhin ist bekannt, daß Ethyldichlorphosphan IIb mit Methylvinylketon (VIa) zu 5-Methyl-2-ethyl-2-oxo-1,2-oxa-4-phospholen (Vlla) reagiert (A.N. Pudovik et al., Isv. Akad. Nauk. SSSR, Ser. Khim. (engl. Fassung) 2543 (1970));
Et = Ethyl in Formel IIb; Me = Methyl in Formel VIIa; Ac = Acetyl;

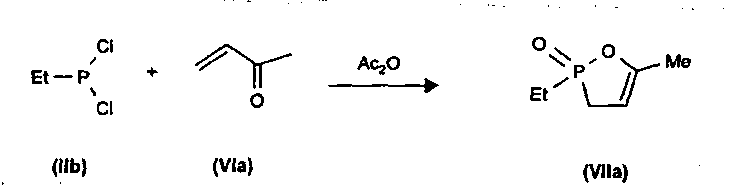

Schließlich führt die Umsetzung von 2-Thienyl-dichlorphosphan (IIc) mit α,β,-ungesättigten Ketonen zu 2-Thienyl-2-oxo-1,2-oxa-4-phospholenen (VIIb) (R.Z.Aliev, Isv. Akad. Nauk., SSSR, Ser. Khim (engl. Fassung), 2719 (1973)). 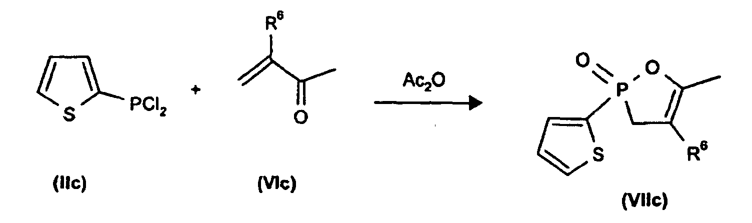 worin R⁶ für Wasserstoff oder Methyl steht.

Analoge Umsetzungen, z.B. mit dem im Vergleich zu Phenyldichlorphosphan hochreaktiven Methanphosphonigsäurediestern sind in der Literatur bislang nicht beschrieben worden. Auch analoge Umsetzungen mit Acrolein (III; R² = H) sind nicht bekannt.

Wegen der viel reaktiveren Komponenten (II) und (III) und der komplexen Reaktionsmischung bzw. des komplexen Reaktionsverlaufs in Stufe 1 ist es äußerst überraschend, daß das erfindungsgemäße Verfahren in hohen Ausbeuten über die Intermediate (Addukte IV) zu den α-Aminonitrilderivaten (V) bzw. (V-1) und anschließend zu den Verbindungen (I) umgesetzt werden können.

Das erfindungsgemäße Verfahren wird in Stufe 1 im allgemeinen so durchgeführt, daß man Verbindungen der allgemeinen Formel (II) bzw. (II-1) mit ungesättigten Verbindungen der allgemeinen Formel (III), vorzugsweise in Gegenwart eines Kondensationsmittels oder Aktivators, umsetzt. Als Aktivatoren/Kondensationsmittel eignen sich Stoffe, welche geeignet sind, die Addition der Phosphorkomponente an die alpha-beta-ungesättigte Ketoverbindung (III) zu fördern oder zu katalysieren. .Geeignete Kondensationsmittel oder Aktivatoren sind Carbonsäureanhydride, vorzugsweise Anhydride von Alkancarbonsäuren mit 1 bis 6 C-Atomen, z. B. Essigsäureanhydrid oder Propionsäureanyhdrid.

Geeignet sind auch Mischungen der Anhydride mit bestimmten Anteilen an Alkoholen ROH, wobei R die genannte Bedeutung hat.

Die Umsetzung von Verbindungen (II) und (III) kann ohne Lösungsmittel oder in Gegenwart eines organischen Lösungsmittels, z.B. in Gegenwart von aliphatischen oder aromatischen Kohlenwasserstoffen, die gegebenenfalls halogeniert sind, wie Dichlormethan, Toluol, Xylol, Chlorbenzol, oder Ethern wie Dioxan oder Alkoholen wie Ethanol, n-Butanol etc. oder Gemischen dieser exemplarischen Lösungsmittel erfolgen.

Die Phosphorkomponenten der allgemeinen Formel (II) werden in Molverhältnissen eingesetzt, die von der Stöchiometrie weit abweichen können, vorzugsweise in Molverhältnissen von 1:2 bis 2:1, insbesondere jedoch im wesentlichen in äquimolaren Mengen, bezogen auf die Komponente (III), eingesetzt.

Wenn die Umsetzung der Komponenten (II(und (III) in Gegenwart eines Anhydrids A₂O, wie z.B. Essigsäureanhydrid oder Propionsäureanhydrid, durchgeführt wird, sind in der Regel Einsatzmengen des Anhydrids im Bereich von über 0 bis 400 Mol-%, vorzugsweise Mengen von 50 bis 150 Mol-%, bezogen auf die Ausgangskomponente (II) und (III), die in der niedrigsten molaren Menge eingesetzt wird, geeignet.

Wenn die Umsetzung der Komponenten (II-1) und (III) in Gegenwart des Anhydrids A₂O z.B. Essigsäurenanhydrids und eines Alkohols ROH z.B. (C₁-C₅)Alkanol wie Ethanol durchgeführt wird, werden bevorzugt 50 bis 150 mol-% Acetanhydrid und 50 bis 200 mol-% Alkohol, insbesondere im Verhältnis Anhydrid:Alkohol von 1:1 bis 1:1,5, bezogen auf die Ausgangskomponente (II) oder (III), die mit der niedrigsten molaren Menge eingesetzt wird, verwendet.

Die erfindungsgemäße Umsetzung der Verbindungen (II) und (III) gelingt in der Regel bei Reaktionstemperaturen zwischen -80°C und +200°C, vorzugsweise zwischen -10°C und +60°C. Die Reaktionsdauer hängt im allgemeinen von der Reaktionstemperatur, der Ansatzgröße, den spezifischen Reaktanten, dem Lösungsmittel und den Kondensationsmitteln/Aktivatoren ab und liegt beispielsweise im Bereich von 0,5 - 48 Stunden (h), vorzugsweise 0,5 - 18 h.

Die erfindungsgemäße Umsetzung der Zwischenverbindungen (IV) bzw. (IV-1) zu den gewünschten α-Aminonitrilen (V) bzw. (V-1) (Stufe 2) kann überraschenderweise unter Bedingungen durchgeführt werden, wie sie analog zur Herstellung von Aminonitrilen aus Aldehyden oder Ketonen nach dem Typ der "Strecker-Synthese" bekannt sind (siehe Lehrbücher und Handbücher der organischen chemischen Synthese). Nach einer möglichen Verfahrensweise wird die das Rohprodukt (IV) bzw. (IV-1) enthaltende Reaktionslösung zu einer Lösung oder Suspension aus einem Alkalicyanid und Ammoniumchlorid in wässriger Ammoniaklösung gegeben wird.
Hierbei können auch Gemische mit den bereits genannten organischen Lösungsmittel, wie z.B. Toluol, Xylol, Chlorbenzol, Dichlormethan, Ethanol, Butanol etc. eingesetzt werden. Anstelle von Alkalicyaniden können auch Erdalkalicyanide oder Ammoniumcyanid, oder Lösungen von Blausäure in Ammoniak eingesetzt werden.

Die Cyanide bzw. die Blausäure werden z. B. in Mengen von 80 - 130 Mol-%, bevorzugt jedoch in im wesentlichen äquimolaren Mengen, bezogen auf die Komponenten der Formel (IV), eingesetzt. Die auf die Verbindung (IV) bezogene Ammoniakmenge beträgt beispielsweise zwischen 100 und 800 Mol-%, bevorzugt 100 bis 400 Mol-%. Die Umsetzungen der Verbindungen (IV) nach den Bedingungen der Strecker-Synthese werden beispielsweise bei -10°C bis 100°C, vorzugsweise bei 0-45° C durchgeführt.

Die Verbindungen der Formel (V) bzw. (V-1) werden vorzugsweise als Salze erhalten, in denen das acide Wasserstoffatom an der Phosphinoylgruppe durch ein Kationenäquivalent, vorzugsweise ein Kationenäquivalent wie z.B. Li⁺, Na⁺, K⁺, (Mg²⁺)_{1/2}, (Ca²⁺)_{1/2}, NH₄⁺ ersetzt ist.

Alternativ können die Zwischenverbindungen (IV) oder (IV-1) durch Destillation oder extraktive Methoden zunächst gereinigt werden und in gereinigter Form zu den Aminonitrilen (V) oder (V-1) umgesetzt werden.

In einer weiteren Variante werden die Zwischenverbindungen (Addukte IV) bzw. (IV-1) zunächst mit Wasser zu den Aldehyden bzw. Ketonen der allgemeinen Formel (IV') bzw. (IV-1) hydrolysiert und in einem weiteren Schritt zu den α-Aminonitrilen (V) bzw. (V-1) umgesetzt.

In der allgemeinen Formel (IV) bedeutet R* Wasserstoff oder (C₁-C₄)-Alkyl. Die Verbindung mit R* = Wasserstoff und Z = Hydroxy oder deren Salze sind in der Methylphosphinsäurereihe neu und daher ebenfalls Gegenstand der Erfindung, d. h. die Verbindung der Formel (IV'-2) oder deren Salze

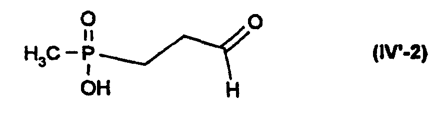

Die Verbindung (IV) mit R* = Methyl und Z = Hydroxy ist dagegen bekannt (L.D. Quin et al., J. Org. Chem. 39, 686 (1974)).

Gemäß Stufe 3 des erfindungsgemäßen Verfahrens stellen die α-Aminonitrile der allgemeinen Formel (V) bzw. (V-1) wertvolle Vorprodukte dar, die sich analog literaturbekannten Verfahrensbedingungen (Houben - Weyl, Methoden der Organischen Chemie XI/2, S. 305 und S. 371, 1958) sowohl im sauren wie auch im alkalischen Medium zu den biologisch aktiven Aminosäuren der Formel (I), insbesondere zu Glufosinate der Formel (Ia) verseifen lassen.

Im Vergleich zu bekannten Verfahren zur Synthese der herbiziden Aminosäure (Ia) weist das erfindungsgemäße Verfahren einige Vorteile auf, z. B. kommt es ohne zusätzliche Veresterung der Phosphorkomponenten der Vorprodukte (IV), (IV) und (V) der Vorprodukte aus. Außerdem kann das Verfahren wahlweise in jeder Stufe separat oder über alle 3 Stufen als Eintopfverfahren durchgeführt werden.

So kann die essentielle PC-Verknüpfung zum Aufbau der Aminosäureseitenkette in einem Schritt z.B. mit Methyldihalogenphosphanen bzw. vorzugsweise Methanphosponigsäurediestern (II) bzw. (II-1) und Olefinen (III) durchgeführt werden, ohne das eine aufwendige Umarbeitung z.B. von Methyldichlorphosphan zu Methanphosponigsäurenmonoestern nötig ist. Außerdem wird im Vergleich zu dem aus EP-A-0011245 bekannten Verfahren die radikalische Addition der Methanphosphonigsäuremonoester an Acroleinderivate vermieden, die leicht zu Nebenprodukten führt.
Bei dem erfindungsgemäßen Verfahren können z. B. die einfach zugänglichen Olefinkomponenten Acrolein bzw. Methylvinylketon direkt ohne notwendige Derivatisierung eingesetzt werden. Weiterhin fallen bei dem erfindungsgemäßen Verfahren die α-Aminonitrile (V) bzw. (V-1) mit freier Phosphinsäure - bzw. Phosphinatgruppierung an, so daß im letzen Syntheseschritt lediglich die Nitrilgruppe zur freien Aminosäure verseift werden muß. Die beim genannten herkömmlichen Verfahren erforderliche Deblockierung der Phosphinestergruppe zur freien Phosphinsäure ist damit überflüssig.

Die nachfolgenden Beispiele erläutern das Verfahren, ohne daß damit eine Einschränkung der möglichen Verfahrensbedingungen gemeint ist. Die Mengenangaben beziehen sich auf das Gewicht, sofern nicht Anderes spezifisch definiert ist.

### Beispiel 1

### 2-Amino-2-methyl-4-(hydroxy-methylphosphinyl)-buttersäure, Ammoniumsalz

7,01 g (0,10 mol) Methylvinylketon werden bei Raumtemperatur unter einer Inertgasatmosphäre mit 10,21 g (0,10 mol) Essigsäureanhydrid versetzt. Anschließend werden unter Kühlung bei maximal 25-30° C 13,61 g (0,10 mol) Methanphosphonigsäurediethylester zugetropft. Die Reaktionsmischung wird ca. 6 Stunden bei 30° C nachgerührt. Anschließend wird die Mischung bei 20-25° C zu einer Lösung von 4,41 (0,09 mol) Natriumcyanid und 9,63 g (0,18 mol) Ammoniumchlorid in 50 ml Ammoniaklösung (25 %ig) getropft. Nach 4-stündigem Nachrühren bei 25° C wird das rohe Aminonitril ohne Isolierung in 200 ml Salzsäure (37 %ig) rasch eingetropft. Anschließend wird das Reaktionsgemisch ca. 4 Stunden unter Abdestillation von Ethanol und Essigsäure am Rückfluß gekocht. Nach dem Einrotieren wird mit Ammoniaklösung ein pH-Wert von ca. 9 eingestellt und das gewünschte Produkt durch Umkristallisieren aus Methanol von Salzen befreit.

Man erhält 19,1 g (entsprechend 94,5 % d. Th.) an 2-Amino-2-methyl-4-hydroxymethylphosphinyl)-buttersäure, Ammoniumsalz
¹H-NMR (D₂O) : 1.56 (d, J = 14Hz, 3H); 1.63 (s, 3H); 1.7-2.3 (m, 4H)
³¹P-NMR (D₂O):54.4.

### Beispiel 2

### 2-Amino-2-methyl-4-(hydroxy-methylphosphinyl)-buttersäure, Ammoniumsalz

2,10 g (0,03 Mol) Methylvinylketon werden bei Raumtemperatur und mit 3,06 g (0,03 Mol) Essigsäureanhydrid in 20 ml Dichlormethan gelöst. Anschließend werden bei 25-28° C 3,51 g (0,03 Mol) Methyldichlorphosphan rasch zugetropft, das Gemisch 3 Stunden bei ca. 30° C gerührt und zu einer Lösung von 1,375 g (0,0275 mol) Natriumcyanid und 2,94 g (0,055 Mol) Ammoniumchlorid in 25 ml Ammoniak (25 %ig) getropft. Man rührt das Gemisch ca. 4 Stunden bei 28-30° C und tropft die zweiphasige rohe Aminonitrillösung bei 25-30° C zu 100 ml Salzsäure (37 %ig). Anschließend wird ca. 4 Stunden am Rückfluß erhitzt und wie unter Beispiel 1 aufgearbeitet. Man erhält 5,83 g (entsprechend 92 % der Theorie) an 2-Amino-2-methyl-4-(hydroxy-methylphosphinyl-buttersäure, Ammoniumsalz.
¹H-NMR (D₂O) : 1.57 (d, J = 14Hz, 3H); 1.65 (s, 3H); 1.7-2.3 (m, 14H).
³¹P-NMR:54.5

### Beispiel 3

### 2-Amino-4-(hydroxy-methylphosphinyl)-buttersäure, Ammoniumsalz

5,61 (0,10 Mol) Acrolein - frisch destilliert - werden bei Raumtemperatur zu 10,21 g (0,10 Mol) Essigsäureanhydrid gegeben. Anschließend werden bei 25-30° C 13,61 g (0,10 Mol) Methanphosphonigsäurediethylester zugetropft. Nach 2 Stunden Rühren bei 30° C wird das Gemisch bei 25-28° C zu einer Lösung von 4,9 g (0,10 Mol) Natriumcyanid und 10,7 g (0,20 Mol) Ammoniumchlorid in 50 ml Ammoniak (25 %ig) getropft. Nach 2 Stunden bei 30 °C wird das rohe Aminonitril in 200 ml Salzsäure (37 %ig) eingetropft. Anschließend wird unter Abdestillieren von Ethanol und Essigsäure 2 Stunden am Rückfluß erhitzt. Nach dem Einrotieren wird mit Ammoniaklösung ein pH-Wert von ca. 9 eingestellt und das Produkt durch Kristallisation aus Methanol gereinigt. Man erhält 19,4 g (98% d. Theorie) an 2-Amino-4-(hydroxy-methylphosphinyl)-buttersäure, Ammoniumsalz.
¹H-NMR (D₂O):1.60 (d, 14Hz, 3H); 1.8-2.4 (m, 4H); 4.28 (t, J = 6 Hz, 1 H).
³¹P-NMR (D₂O):55,9.

### Beispiel 4

### 2-Amino-2-methyl-4-(hydroxy-methylphosphinyl)-buttersäure, Ammoniumsalz

14,02 g (0,20 mol) Methylvinylketon werden bei Raumtemperatur unter einer Inertgasatmosphäre mit 20,42 g (0,20 mol) Essigsäuresäureanhydrid versetzt. Anschließend werden unter Kühlung bei maximal 25 bis 30°C ein Gemisch von 27,22 (0,20 mol) Methanphosphonigsäurediethylester und 9,2 g (0,2 mol) Ethanol zugetropft. Die Reaktionsmischung wird ca. 6 Stunden bei 30°C nachgerührt. Anschließend wird die Mischung bei 20 bis 25°C zu einer Lösung von 8,82 g (0,18 mol) Natriumcyanid und 19,26 g (0,36 mol) Ammoniumchlorid in 100 ml Ammoniaklösung (25 %ig) getropft. Nach 4-stündigem Nachrühren bei 25°C wird das rohe Aminonitril ohne Isolierung in 400 ml Salzsäure (37 %ig) rasch eingetropft. Anschließend wird das Reaktionsgemisch ca. 4 Stunden unter Abdestillieren von Ethanol und Essigsäure am Rückfluß gekocht. Nach dem Einrotieren wird mit Ammoniaklösung ein pH-Wert von ca. 9 eingestellt und das gewünschte Produkt durch Umkristallisieren aus Methanol von Salzen befreit.

Man erhält 38,8 g (entsprechend 96 % d.Th.) an 2-Amino-2-methyl-4-hydroxymethylphosphinyl)-buttersäure, Ammoniumsalz (physikalische Daten s. Bsp. 1).

### Beispiel 5

### 2-Amino-4-(hydroxy-methylphosphinyl)-buttersäure, Ammoniumsalz

5,61 (0,10 Mol) Acrolein - frisch destilliert - werden bei Raumtemperatur zu 10,21 g (0,10 Mol) Essigsäureanhydrid gegeben. Anschließend wird dieses Gemisch bei 25 bis 30°C zu 13,61 g (0,10 Mol) Methanphosphonigsäurediethylester und 4,6 g (0.1 mol) Ethanol zugetropft. Nach 2 Stunden Rühren bei 30°C wird das Gemisch bei 25 bis 28°C zu einer Lösung von 4,9 g (0,10 Mol) Natriumcyanid und 10,7 g (0,20 Mol) Ammoniumchlorid in 50 ml Ammoniak (25 %ig) getropft. Nach 2 Stunden bei 30°C wird das rohe Aminonitril in 200 ml Salzsäure (37 %ig) eingetropft. Anschließend wird unter Abdestillieren von Ethanol und Essigsäure 2 Stunden am Rückfluß erhitzt. Nach dem Einrotieren wird mit Ammoniaklösung ein pH-Wert von ca. 9 eingestellt und das Produkt durch Kristallisation aus Methanol gereinigt. Man erhält 19,6 g (99 % d. Theorie) an 2-Amino-4-(hydroxy-methylphosphinyl)-buttersäure, Ammoniumsalz.
¹H-NMR (D₂O): 1.60 (d, 14Hz, 3H); 1,8-2.4 (m, 4H); 4.28 (t, J = 6 Hz, 1 H).
³¹P-NMR (D₂O): 55.9.

### Beispiel 6

### 2-Amino-4-(hydroxy-methylphosphinyl)-buttersäure, Ammoniumsalz

5,61 (0,10 Mol) Acrolein - frisch destilliert - werden bei Raumtemperatur zu 10,21 g (0,10 Mol) Essigsäureanhydrid gegeben. Anschließend wird dieses Gemisch bei 25 bis 30°C zu 16,41 g (0,10 Mol) Methanphosphonigsäuredibutylester und 14,8 g (0,2 Mol) n-Butanol zugetropft. Nach 2 Stunden Rühren bei 30°C wird das Gemisch bei 25 bis 28°C zu einer Lösung von 4,9 g (0,10 Mol) Natriumcyanid und 10,7 g (0,20 Mol) Ammoniumchlorid in 50 ml Ammoniak (25 %ig) getropft. Nach 2 Stunden bei 30°C wird das rohe Aminonitril in 200 ml Salzsäure (37 %ig) eingetropft. Anschließend wird unter Abdestillieren von Ethanol und Essigsäure 2 Stunden am Rückfluß erhitzt. Nach dem Einrotieren wird mit Ammoniaklösung ein pH-Wert von ca. 9 eingestellt und das Produkt durch Kristallisation aus Methanol gereinigt. Man erhält 17,8 g (90 % d. Theorie) an 2-Amino-4-(hydroxymethylphosphinyl)-buttersäure, Ammoniumsalz.
¹H-NMR (D2O) : 1.60 (d, 14Hz, 3H); 1.8-2.4 (m, 4H); 4.28 (t,J = 6 Hz, 1 H).
³¹P-NMR (D₂O):55,9.

## Patentansprüche

1. Verfahren zur Herstellung von Verbindungen der Formel (I), 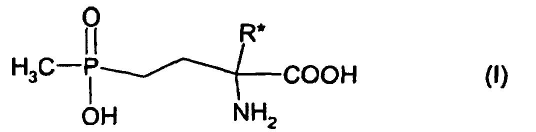 worin R* Wasserstoff oder (C₁-C₄)-Alkyl bedeutet, oder deren Salze mit Säuren oder Basen, **dadurch gekennzeichnet, daß** man
a) (Stufe 1)
eine trivalente Methylphosphorverbindung der Formel (II) mit einem ungesättigten Derivat der Formel (III) in Gegenwart eines Kondensationsmittels oder Aktivators aus der Gruppe der Carbonsäureanhydride und gegebenfalls Alkoholen zu einem Addukt (IV) umsetzt,
Stufe 1: 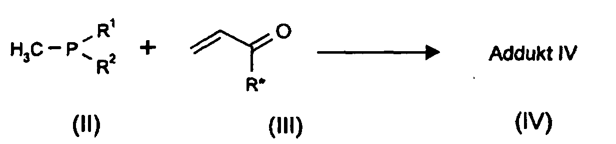 wobei in den Formeln
R¹ und R² unabhängig voneinander (C₁-C₁₈)Alkoxy, das gegebenenfalls substituiert sein kann, Benzyloxy oder Phenoxy, die ebenfalls substituiert sein können, bedeuten oder einer der Reste R¹ bzw. R² Hydroxy bedeutet, und
R* wie in Formel (I) definiert ist,
b) (Stufe 2)
das Addukt (IV), gegebenenfalls nach Hydrolyse zu Aldehyden (R* = H) bzw. Ketonen (R* = Alkyl) der Formel (IV') oder einem Salz davon, 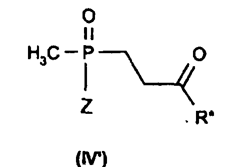 worin Z OH, R¹ oder R² bedeutet, unter den Bedingungen einer Streckersynthese mit Ammoniak/Ammoniumchlorid und Natriumcyanid oder alternativ mit Gemischen aus Ammoniak und Blausäure bzw. mit Ammoniak und einem Salz der Blausäure, gegebenenfalls in Gegenwart von Ammoniumchlorid, zu den α-Aminonitrilen der allgemeinen Formel (V) bzw. einem Salz davon umsetzt,
Stufe 2: 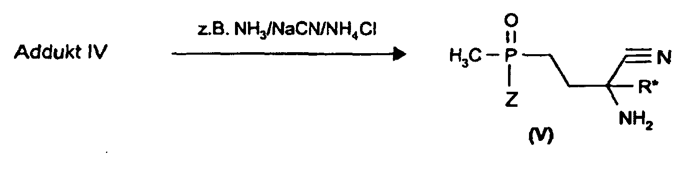 wobei in den Formeln (IV') und (V) der Rest R* wie in Formel (I) definiert ist und Z wie in Formel (IV') definiert ist oder OH bedeutet, und
c) (Stufe 3)
die Verbindung der Formel (V) unter sauren oder basischen Bedingungen zur Verbindung der Formel (I) oder zu deren Salzen hydrolysiert.

2. Verfahren nach Anspruch 1, **dadurch gekennzeichnet, daß**
R¹ und R² unabhängig voneinander (C₁-C₆)Alkoxy, (C₁-C₆)Haloalkoxy, Benzyloxy oder Phenoxy, wobei jeder der letztgenannten beiden Reste unsubstituiert oder durch einen oder mehrere Reste aus der Gruppe Halogen, Alkyl, Haloalkyl, Alkylthio, Nitro, Cyano, Alkylsulfonyl und Haloalkylsulfonyl mit jeweils mit 1 bis 6 C-Atomen im Alkylteil substituiert ist, bedeuten oder einer der Reste R¹ oder R² Hydroxy bedeutet.

3. Verfahren nach Anspruch 1 oder 2, **dadurch gekennzeichnet, daß** man in Stufe 1 als Verbindungen (II) Verbindungen der Formel (II-1) mit einer Verbindung der Formel (III) in Gegenwart von Carbonsäureanhydriden A₂O und Alkoholen ROH zu Addukten (IV) der Formel (IV-1) umsetzt, 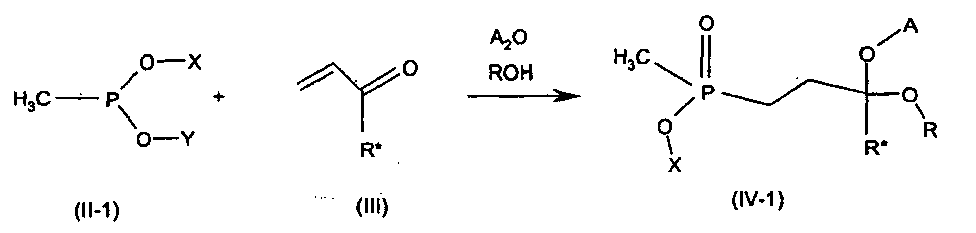 worin
jeder der Reste X und Y unabhängig voneinander H oder (C₁-C₁₈)Alkyl, das unsubstituiert oder substituiert ist, Benzyl oder Phenyl, wobei jeder der beiden vorstehenden Reste unsubstituiert oder substituiert ist, und
A einen Acylrest einer Carbonsäure und
R (C₁-C₁₈)-Alkyl, das unsubstituiert oder substituiert ist, Benzyl oder Phenyl,
wobei jeder der beiden vorstehenden Reste unsubstituiert oder substituiert ist, bedeuten.

4. Verfahren gemäß Anspruch 3, **dadurch gekennzeichnet, daß** X, Y und R jeweils (C₁-C₄)Alkyl,
A einen Acylrest einer Alkancarbonsäure mit 1 bis 6 C-Atomen und
R* ein Wasserstoffatom ist.

5. Verfahren gemäß Anspruch 1 oder 2, **dadurch gekennzeichnet, dass** als Kondensationsmittel oder Aktivator ein Anhydrid einer Alkancarbonsäure mit 1 bis 6 C-Atomen eingesetzt wird.

6. Verfahren zur Herstellung von Verbindungen der Formel (V) oder deren Salz, 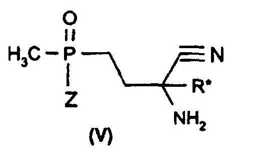 worin Z und R* wie in Stufe 2 nach Anspruch 1 definiert sind, **dadurch gekennzeichnet, dass** Verbindungen der Formel (IV-1), 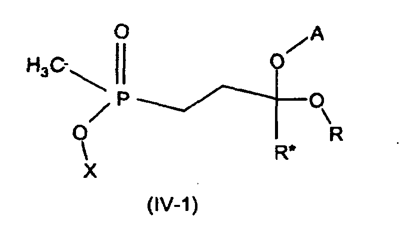 worin
X, A und R gemäß Anspruch 3 und R* wie in Formel (V) definiert sind, gegebenenfalls nach Hydrolyse zu Aldehyden bzw. Ketonen der Formel (IV') 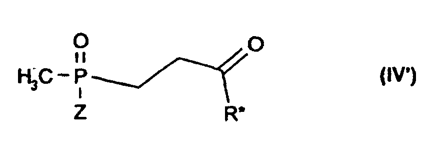 worin Z = OH oder OX bedeutet, X wie in Formel (IV-1) definiert ist und R* wie in Formel (V) definiert ist, unter den Bedingungen einer Streckersynthese mit Ammoniak/Ammoniumchlorid und Natriumcyanid oder alternativ mit Gemischen aus Ammoniak und Blausäure bzw. mit Ammoniak und einem Salz der Blausäure, gegebenenfalls in Gegenwart von Ammoniumchlorid zu den α-Aminonitrilen der allgemeinen Formel (V) bzw. einem Salz umgesetzt werden.

7. Verbindung der Formel (IV-1), 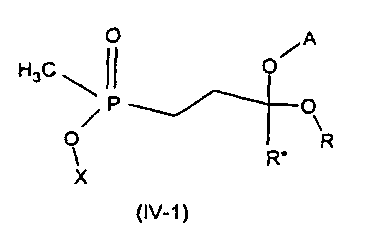 worin
X, A und R gemäß Anspruch 3 definiert sind und R* H oder (C₁-C₄)-Alkyl bedeutet, oder deren Salze.

8. Verfahren zur Herstellung von Verbindungen der Formel (IV-1) oder deren Salzen nach Anspruch 7, **dadurch gekennzeichnet, daß** man
Verbindungen der Formel (II-1) mit einer Verbindung der Formel (III) in Gegenwart von Carbonsäureanhydriden A₂O und Alkoholen ROH zu den Addukten der Formel (IV-1) oder deren Salzen umsetzt, 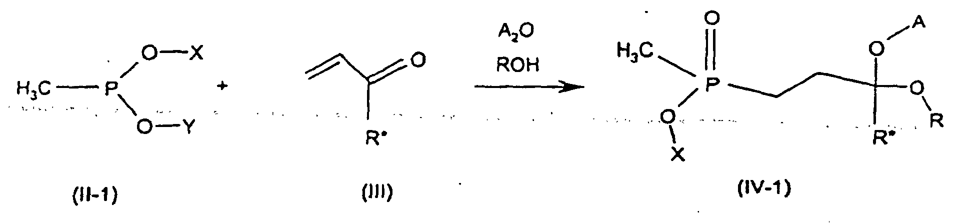 worin
jeder der Reste X und Y unabhängig voneinander H oder (C₁-C₁₈)Alkyl, das unsubstituiert oder substituiert ist, Benzyl oder Phenyl, wobei jeder der beiden vorstehenden Reste unsubstituiert oder substituiert ist, und
R* H oder (C₁-C₄)-Alky)
A einen Acylrest einer Carbonsäure,
R (C₁-C₁₈)-Alkyl, das unsubstituiert oder substituiert ist, Benzyl oder Phenyl,
wobei jeder der beiden vorstehenden Reste unsubstituiert oder substituiert ist, bedeuten.

9. Verfahren nach Anspruch 8, **dadurch gekennzeichnet, daß** 50 bis 150 mol-% Carbonsäureanhydrid A₂O und 50 bis 200 mol-% Alkohol ROH, bezogen auf die niedrigst molare Ausgangskomponente (II-1) oder (III) verwendet wird.

10. Verfahren zur Herstellung von Verbindungen der Formel (I), 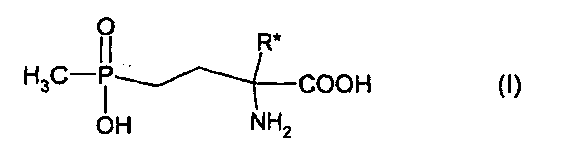 worin R* Wasserstoff oder (C₁-C₄)-Alkyl bedeutet, oder deren Salzen.mit Säuren oder Basen, **dadurch gekennzeichnet, dass** man Verbindungen der Formel (IV-1) 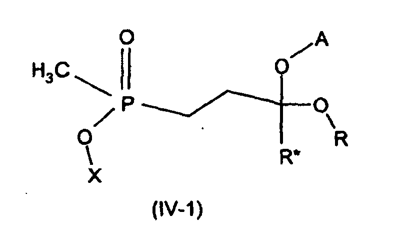 worin
R* wie in Formel (I) definiert ist,
X H oder (C₁-C₁₈)Alkyl, das unsubstituiert oder substituiert ist, Benzyl oder Phenyl, wobei jeder der beiden vorstehenden Reste unsubstituiert oder substituiert ist,
A einen Acylrest einer Carbonsäure und
R (C₁-C₁₈)-Alkyl, das unsubstituiert oder substituiert ist, Benzyl oder Phenyl,
wobei jeder der beiden vorstehenden Reste unsubstituiert oder substituiert ist, bedeuten, oder deren Salze,
gegebenenfalls nach Hydrolyse zu Aldehyden (R* = H) bzw. Ketonen (R* = Alkyl) der Formel (IV'), 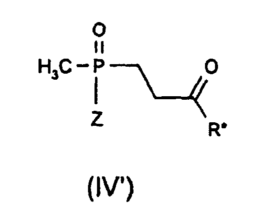 worin Z OH oder OX bedeutet, oder zu deren Salzen, unter den Bedingungen einer Streckersynthese mit Ammoniak/Ammoniumchlorid und Natriumcyanid oder alternativ mit Gemischen aus Ammoniak und Blausäure bzw. mit Ammoniak und einem Salz der Blausäure, gegebenenfalls in Gegenwart von Ammoniumchlorid, zu den α-Aminonitrilen der allgemeinen Formel (V) bzw. einem Salz davon umsetzt, 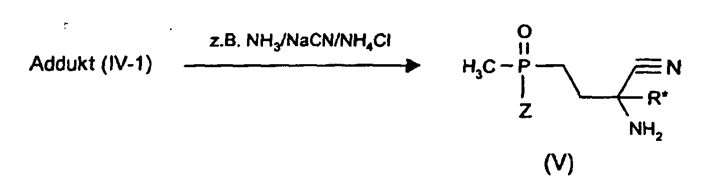 wobei in den Formeln (IV') und (V) der Rest R* wie in Formel (I) definiert ist, X wie in Formel (IV-1) definiert ist und Z in Formel (V) wie in Formel (IV') definiert ist oder OH bedeutet, und
die Verbindung der Formel (V) oder deren Salz unter sauren oder basischen Bedingungen zur Verbindung der Formel (I) oder deren Salz hydrolysiert.

## Claims

1. A process for preparing compounds of the formula I 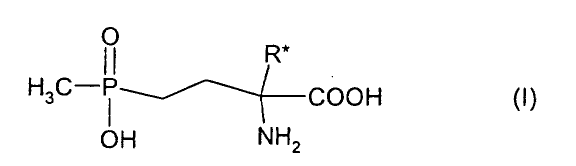 in which R* is hydrogen or (C₁-C₄)-alkyl, or salts thereof with acids or bases, which comprises
a) (Step 1)
reacting a trivalent methylphosphorus compound of the formula (II) with an unsaturated derivative of the formula (III), in the presence of a condensing agent or activator from the group consisting of carboxylic anhydrides and, if appropriate, alcohols, to give an adduct (IV),
Step 1: 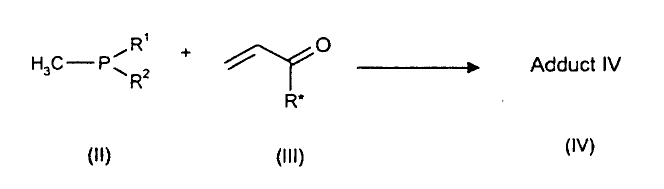 where in the formulae
R¹ and R² independently of one another are (C₁-C₁₈)alkoxy with or without substitution, benzyloxy or phenoxy, which may also be substituted, or one of the radicals R¹ and R² is hydroxyl, and
R* is as defined in formula (I),
b) (Step 2)
the adduct (IV) is, if appropriate after hydrolysis to aldehydes (R* = H) or ketones (R* = alkyl) of the formula (IV'), or to a salt thereof 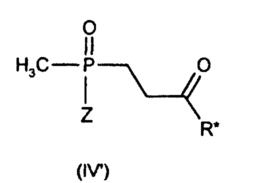 in which Z is OH, R¹ or R², reacted under the conditions of a Strecker synthesis with ammonia/ammonium chloride and sodium cyanide or alternatively with mixtures of ammonia and hydrocyanic acid or with ammonia and a salt of hydrocyanic acid, if appropriate in the presence of ammonium chloride, to give the α-aminonitriles of the formula (V) or a salt thereof,
Step 2: 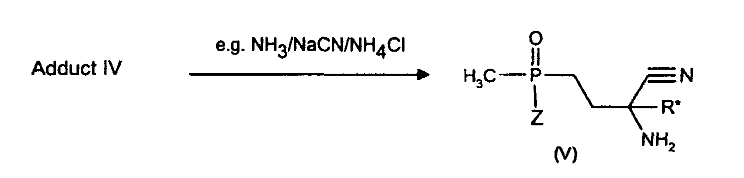 where in the formulae (IV') and (V) the radical R* is as defined in formula (I) and Z is as defined in formula (IV') or is OH, and
c) (Step 3)
the compound of the formula (V) is hydrolyzed under acidic or basic conditions to give the compound of the formula (I) or salts thereof.

2. The process as claimed in claim 1, wherein R¹ and R² independently of one another are (C₁-C₆)alkoxy, (C₁-C₆)haloalkoxy, benzyloxy or phenoxy, where each of the two last-mentioned radicals is unsubstituted or substituted by one or more radicals selected from the group consisting of halogen, alkyl, haloalkyl, alkylthio, nitro, cyano, alkylsulfonyl and haloalkylsulfonyl having in each case 1 to 6 carbon atoms in the alkyl moiety, or one of the radicals R¹ or R² is hydroxyl.

3. The process as claimed in claim 1 or 2, wherein in step 1, as compounds (II), compounds of the formula (II-1) are reacted with a compound of the formula (III) in the presence of carboxylic anhydrides A₂O and alcohols ROH to give adducts (IV) of the formula (IV-1), 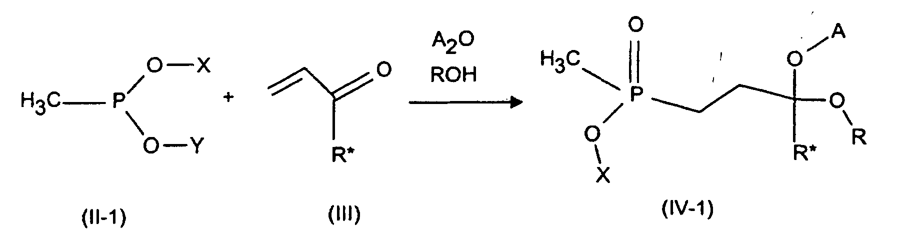 in which
each of the radicals X and Y independently of one another is H or (C₁-C₁₈)alkyl which is unsubstituted or substituted, benzyl or phenyl, where each of the two abovementioned radicals is unsubstituted or substituted, and
A is an acyl radical of a carboxylic acid, and
R is (C₁-C₁₈)alkyl, which is unsubstituted or substituted, benzyl or phenyl, where each of the two radicals above is unsubstituted or substituted.

4. The process as claimed in claim 3, wherein
X, Y and R are each (C₁-C₄)alkyl,
A is an acyl radical of an alkanecarboxylic acid having 1 to 6 carbon atoms and
R* is a hydrogen atom.

5. The process as claimed in claim 1 or 2, which comprises using, as condensing agent or activator, an anhydride of an alkanecarboxylic acid having 1 to 6 carbon atoms.

6. A process for preparing compounds of the formula (V) or a salt thereof 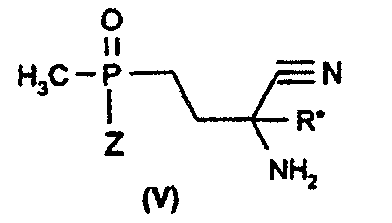 in which Z and R* are as defined in step 2 of claim 1, which comprises reacting compounds of the formula (IV-1), 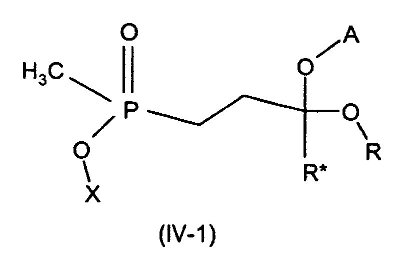 in which
X, A and R are as defined in claim 3 and R* is as defined in formula (V), if appropriate after hydrolysis to aldehydes or ketones of the formula (IV'), 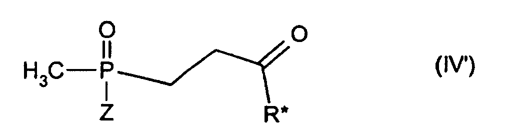 in which Z = OH or OX, X is as defined in formula (IV-1) and R* is as defined in formula (V), under the conditions of a Strecker synthesis with ammonia/ammonium chloride and sodium cyanide or alternatively with mixtures of ammonia and hydrocyanic acid or with ammonia and a salt of hydrocyanic acid, if appropriate in the presence of ammonium chloride, to give the α-aminonitriles of the formula (V) or a salt.

7. A compound of the formula (IV-1), 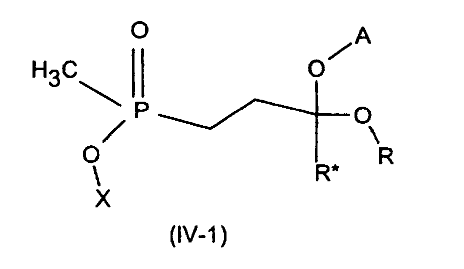 in which
X, A and R are as defined in claim 3 and R* is H or (C₁-C₄)-alkyl, or salts thereof.

8. The process for preparing compounds of the formula (IV-1) or salts thereof as claimed in claim 7, wherein
compounds of the formula (II-1) are reacted with a compound of the formula (III) in the presence of carboxylic anhydrides A₂O and alcohols ROH to give the adducts of the formula (IV-1) or salts thereof, 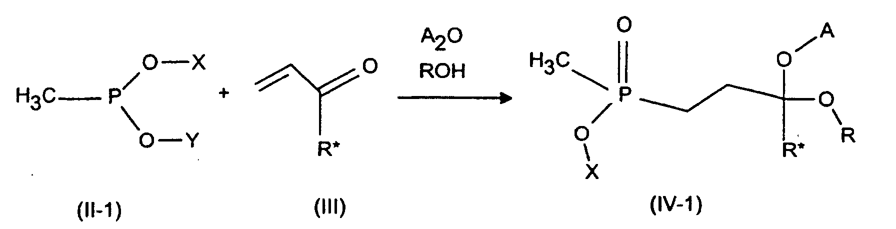 in which
each of the radicals X and Y independently of one another is H or (C₁-C₁₈)alkyl which is unsubstituted or substituted, benzyl or phenyl, where each of the two abovementioned radicals is unsubstituted or substituted, and
R* is H or (C₁-C₄)-alkyl,
A is an acyl radical of a carboxylic acid,
R is (C₁-C₁₈)alkyl, which is unsubstituted or substituted, benzyl or phenyl,
where each of the two radicals above is unsubstituted or substituted.

9. The process as claimed in claim 8, wherein from 50 to 150 mol% of carboxylic anhydride A₂O and from 50 to 200 mol% of alcohol ROH, based on the starting component (II-1) or (III) which has the lowest molarity, are employed.

10. A process for preparing compounds of the formula (I), 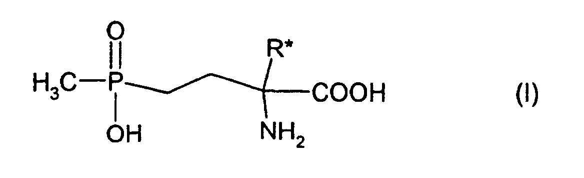 in which R* is hydrogen or (C₁-C₄)-alkyl, or salts thereof with acids or bases, which comprises reacting compounds of the formula (IV-1), 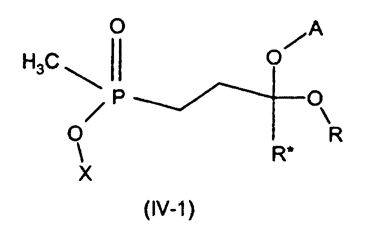 in which
R* is as defined in formula (I),
X is H or (C₁-C₁₈)alkyl which is unsubstituted or substituted, benzyl or phenyl, where each of the two abovementioned radicals is unsubstituted or substituted,
A is an acyl radical of a carboxylic acid, and
R is (C₁-C₁₈)alkyl, which is unsubstituted or substituted, benzyl or phenyl, where each of the two radicals above is unsubstituted or substituted, or salts thereof,
if appropriate after hydrolysis to aldehydes (R* = H) or ketones (R* = alkyl) of the formula (IV'), 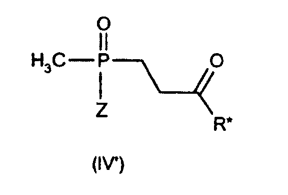 in which Z is OH or OX, or to salts thereof under the conditions of a Strecker synthesis with ammonia/ammonium chloride and sodium cyanide or alternatively with mixtures of ammonia and hydrocyanic acid or with ammonia and a salt of hydrocyanic acid, if appropriate in the presence of ammonium chloride, to give the α-aminonitriles of the formula (V) or a salt thereof, 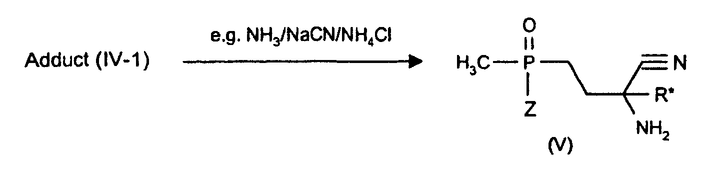 where in the formulae (IV') and (V) the radical R* is as defined in formula (I), X is as defined in formula (IV-1) and Z in formula (V) is as defined in formula (IV') or is OH, and
the compound of the formula (V) or a salt thereof is hydrolyzed under acidic or basic conditions to give the compound of the formula (I) or a salt thereof.

## Revendications

1. Procédé pour la préparation de composés de f ormule (I) 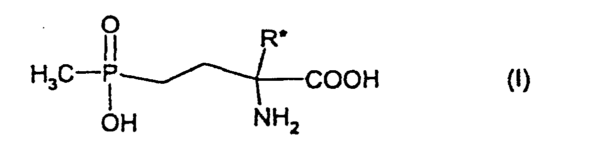 où R* représente un atome d'hydrogène ou un groupe alkyle en C₁-C₄, ou ses sels avec des acides ou bases, **caractérisé en ce que**
a) (Etape 1)
on fait réagir un composé trivalent de méthylphosphore de formule (II) sur un dérivé insaturé de formule (III) en présence d'un agent de condensation ou d'un activateur pris dans le groupe des anhydrides d'acides carboniques et éventuellement des alcools pour obtenir un adduit de formule ( IV)
Etape 1 : 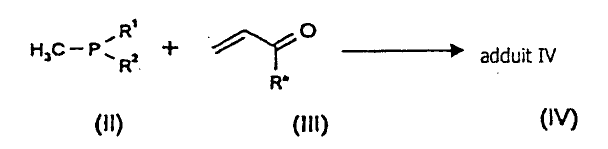 dans les formules
R¹ et R² indépendamment l'un de l'autre représentent un groupe alkoxy en C₁-C₁₈, qui peut éventuellement être substitué, benzyloxy ou phénoxy, qui peuvent également être substitués, ou un des restes R¹ ou R² représentent un groupe hydroxy, et
R* est défini comme à la formule (I),
b) (Etape 2)
on fait réagir l'adduit (IV), éventuellement après l'hydrolyse en aldéhydes (R* = H) ou cétones (R* = alkyle) de formule (IV') ou un de leurs sels 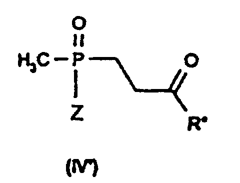 où Z représente un groupe OH, R¹ ou R² représentent, sous conditions d'une synthèse de Strecker avec l'ammoniac/chlorure d'ammonium et le cyanure de sodium ou alternativement avec des mélanges d'ammoniac et d'acide prussique respectivement d'ammoniac et d'un sel d'acide prussique, éventuellement en présence de chlorure d'ammonium, pour obtenir les α-aminonitriles de formule générale (V) ou un sel de ceux-ci,
Etape 2 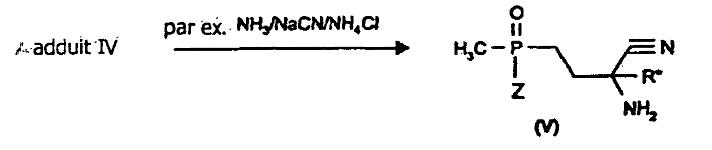 dans les formules (IV') et (V), le reste R* est défini comme à la formule (I) et Z est défini comme à la formule (IV') ou représente un groupe OH et
c) (étape 3)
on hydrolyse le composé de formule (V) sous conditions acides ou basiques pour obtenir le composé de formule (I) ou ses sels.

2. Procédé selon la revendication 1, **caractérisé en ce que** R¹ et R² indépendamment l'un de l'autre représentent un groupe alkoxy en C₁-C₆, haloalkoxy en C₁-C₆, benzyloxy ou phénoxy, chacun des deux derniers restes cités est non substitué ou substitué par un ou plusieurs restes du groupe halogène, alkyle, haloalkyle, alkylthio, nitro, cyano, alkylsulfonyle et haloalkylsulfonyle, chacun présentant 1 à 6 atomes de carbone dans le fragment alkyle, ou un des restes R¹ ou R² représente un groupe hydroxy.

3. Procédé selon les revendications 1 ou 2, **caractérisé en ce qu'**on fait réagir à l'étape 1 en tant que composés (II) des composés de formule (II-1) sur un composé de formule (III) en présence d'anhydrides d'acides carboxyliques A₂O et d'alcools ROH pour obtenir des adduits (IV) de formule (IV-1), 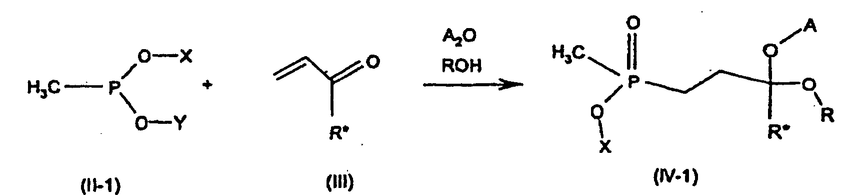 où
chacun des restes X et Y indépendamment l'un de l'autre représente un atome d'hydrogène ou un groupe alkyle en C₁-C₁₈ qui est non substitué ou substitué, benzyle ou phényle, chacun des deux restes précédents est non substitué ou substitué, et
A représente un reste acyle d'un acide carboxylique et
R représente un groupe alkyle en C₁-C₁₈, qui est non substitué ou substitué, benzyle ou phényle, chacun des deux restes précédents est non substitué ou substitué.

4. Procédé selon la revendication 3, **caractérisé en ce que**
X, Y et R chacun représente un groupe alkyle en C₁-C₄,
A représente un reste acyle d'un acide alcane-carboxylique présentant 1 à 6 atomes de carbone et
R* représente un atome d'hydrogène.

5. Procédé selon les revendications 1 ou 2, **caractérisé en ce qu'**on utilise comme agent de condensation ou activateur un anhydride d'un acide alcanecarboxylique présentant 1 à 6 atomes de carbone.

6. Procédé pour la préparation de composés de formule (V) ou de leurs sels 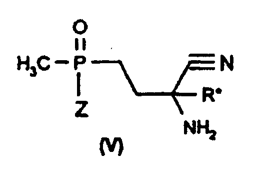 où Z et R* sont définis comme à l'étape 2 selon la revendication 1, **caractérisé en ce qu'**on fait réagir les composés de formule (IV-1), 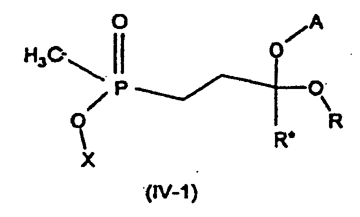 où
X, A et R sont définis selon la revendication 3 et R* est défini comme à la formule (V),
éventuellement après l'hydrolyse en aldéhydes ou cétones de formule (IV') 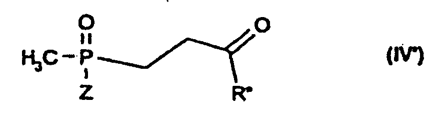 où Z = OH ou OX, X est défini comme à la formule (IV-1) et R* est défini comme à la formule (V), sous conditions d'une synthèse de Strecker avec l'ammoniac/chlorure d'ammonium et le cyanure de sodium ou alternativement avec des mélanges d'ammoniac et d'acide prussique respectivement d'ammoniac et d'un sel d'acide prussique, éventuellement en présence de chlorure d'ammonium, pour obtenir des α-aminonitriles de formule générale (V) ou un sel.

7. Procédé de formule (IV-1) 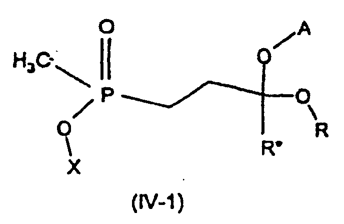 X, A et R sont définis selon la revendication 3 et R* représente un atome d'hydrogène ou un groupe alkyle en C₁-C₄ ou leurs sels.

8. Procédé pour la préparation de composés de formule (IV-1) ou de leurs sels selon la revendication 7, **caractérisé en ce qu'**on fait réagir des composés de formule (II-1) sur
un composé de formule (III) en présence d'anhydrides d'acides carboxyliques A₂O et d'alcools ROH pour obtenir les adduits de formule (IV-1) ou leurs sels 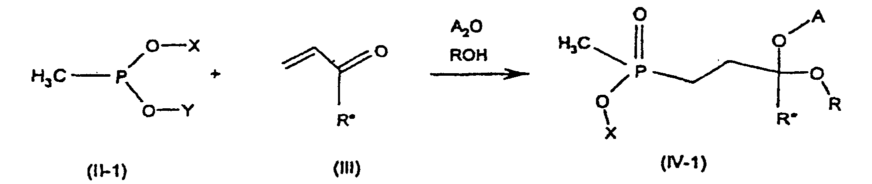 où
chacun des restes X et Y indépendamment l'un de l'autre représente un atome d'hydrogène ou un groupe alkyle en C₁-C₁₈, qui est non substitué ou substitué, benzyle ou phényle, chacun des deux restes précédents est non substitué ou substitué, et
R* représente un atome d'hydrogène ou un groupe alkyle en C₁-C₄,
A représente un reste acyle d'un acide carboxylique et
R représente un groupe alkyle en C₁-C₁₈, qui est non substitué ou substitué, benzyle ou phényle, chacun des deux restes précédents est non substitué ou substitué.

9. Procédé selon la revendication 8, **caractérisé en ce qu'**on utilise 50 à 150 % molaires d'anhydride d'acide carboxylique A₂O et 50 à 200 % molaires d'alcool ROH, par rapport au composé de départ (II-1) ou (III) avec la masse moléculaire plus faible.

10. Procédé pour la préparation de composés de formule (I) 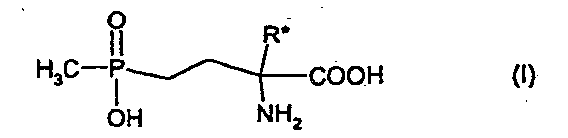 où R* représente un atome d'hydrogène ou un reste alkyle en C₁-C₄, ou ses sels avec des acides ou bases, **caractérisé en ce qu'**on fait réagir des composés de formule (IV-1) 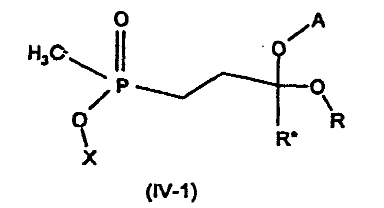 où
R* est défini à la formule (I),
X représente un atome d'hydrogène ou un groupe en C₁-C₁₈, qui est non substitué ou substitué, benzyle ou phényle, chacun des deux restes précédents est non substitué ou substitué,
A représente un reste acyle d'un acide carboxylique et
R représente un groupe alkyle en C₁-C₁₈, qui est non substitué ou substitué, benzyle ou phényle, chacun des deux restes précédents est non substitué ou substitué, ou leurs sels,
éventuellement après l'hydrolyse en aldéhydes (R* = H) ou cétones (R* = alkyle) de formule (IV') 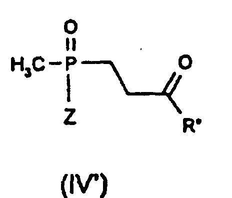 où Z représente un groupe OH ou OX, ou en leurs sels, sous conditions d'une synthèse de Strecker avec l'ammoniac/chlorure d'ammonium et le cyanure de sodium ou alternativement avec des mélanges d'ammoniac et d'acide prussique respectivement d'ammoniac et d'un sel d'acide prussique, éventuellement en présence de chlorure d'ammonium, pour obtenir des α-aminonitriles de formule générale (V) ou un sel de ceux-ci, 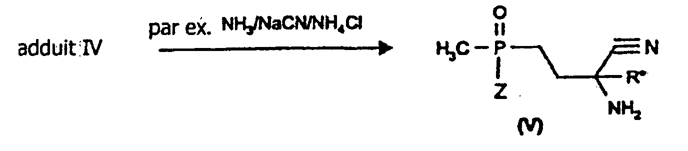 dans les formules (IV') et (V), le reste R* est défini comme à la formule (I), X est défini comme à la formule (IV-1) et Z à la formule (V) est défini comme à la formule (IV') ou représente un groupe OH et on hydrolyse le composé de formule (V) ou son sel sous conditions acides ou basiques pour obtenir le composé de formule (I) ou son sel.
